# FASCICULE DE BREVET EUROPEEN

(11) **EP 3 898 410 B1**
(45) Date de publication et mention de la délivrance du brevet: **02.11.2022**
(21) Numéro de dépôt: 19848892.6
(22) Date de dépôt: 20.12.2019
(51) Int. Cl.: B64C 11/00, B64D 29/06

(54) **SYSTEME PROPULSIF POUR UN AERONEF**
ANTRIEBSSYSTEM FÜR EIN FLUGZEUG
PROPULSION SYSTEM FOR AN AIRCRAFT

(30) Priorité: 20.12.2018 FR 1873646
(43) Date de publication de la demande: 27.10.2021
(73) Titulaire: SAFRAN, 75015 Paris (FR); SAFRAN AIRCRAFT ENGINES, 75015 Paris (FR); Safran Nacelles, 76700 Gonfreville-l'Orcher (FR)
(72) Inventeur: BESSE, Jean-Louis, Robert, Guy, 77550 Moissy-Cramayel (FR); MALDONADO, Ye-Bonne, Karina, 77550 Moissy-Cramayel (FR)
(74) Mandataire: Gevers & Orès
(86) Numéro de dépôt international: PCT/FR2019/053225
(87) Numéro de publication internationale: WO 2020/128377

(56) Documents cités:
- WO-A1-2017/154552
- CH-A2- 711 721
- US-A1- 2006 284 007
- US-A1- 2016 023 754

## Description

### Domaine technique de l'invention

La présente invention concerne le domaine des systèmes propulsifs pour aéronef. Elle se rapporte notamment à un système propulsif à carénage de nacelle rétractable.

### Arrière-plan technique

L'état de la technique comprend notamment les documents CH-A2-711721, US-A1 -2006/284007, US-A1 -2016/023754 et WO-A1 -2017/154552 dont le document CH-A2-711721 concerne un carénage hypersustentateur à géométrie variable et orientable, d'un système propulsif d'un aéronef, permettant de créer et d'orienter, une force normale à l'écoulement principal du flux de propulsion.

Un système propulsif pour aéronef comporte au moins un rotor ou une hélice comportant une pluralité de pales montées sur un arbre tournant.

Il existe des aéronefs, et notamment des Aéronefs à Décollage et Atterrissage Verticaux (ADAV ou VTOL acronyme pour *Vertical Take-Off and Landing* en langue anglaise), présentant des systèmes propulsifs à rotors simples lorsqu'ils ne comprennent qu'un seul rotor ou contrarotatifs lorsqu'ils comprennent des rotors regroupés par paire tournant en sens opposés.

Ces systèmes propulsifs sont soit à rotors carénés (le rotor est alors entouré d'un carénage de nacelle annulaire), soit à rotors libres, les systèmes propulsifs et notamment les rotors (libres ou carénés) pouvant être montés sur un arbre de pivotement permettant l'orientation des systèmes propulsifs et donc des rotors entre une position verticale et une position horizontale, par exemple l'orientation à la verticale pour un décollage ou un atterrissage vertical et l'orientation à l'horizontale pour le vol d'avancement ou mode avion.

Les rotors carénés présentent plusieurs avantages intéressants, tels que :
- une importante diminution de la signature sonore du rotor en émission directe ;
- une protection des pales du rotor vis-à-vis des obstacles alentours ;
- une amélioration des performances du rotor, notamment en vol stationnaire de l'aéronef ou à faible vitesse d'avancement.

En effet, la nacelle carénée procure au rotor une poussée additionnelle en vol stationnaire, lors du décollage ou à faible vitesse d'avancement liée à l'effet de la nacelle carénée sur un flux d'air en aval du rotor, en référence au sens d'écoulement de ce flux d'air sur la nacelle carénée, encore appelé un tube de courant. Plus précisément, sans la présence du carénage de la nacelle, avec un rotor libre, le flux d'air en aval du rotor présente une contraction naturelle vers l'intérieur. Autrement dit, le diamètre du tube de courant décroit vers l'aval jusqu'à atteindre un diamètre égal à la moitié de la section du rotor.

En revanche, pour un rotor caréné, la section de sortie du carénage de la nacelle définit la forme du tube de courant d'air, à savoir une forme cylindrique en sortie du carénage de la nacelle de section sensiblement constante, empêchant ainsi sa contraction naturelle.

Le bilan propulsif dépend de la section de sortie du carénage de la nacelle de sorte que plus la section de sortie du carénage de la nacelle est grande, plus le bilan propulsif augmente. En effet, la poussée engendrée par la présence du carénage de la nacelle est donc générée au niveau du bord d'attaque dudit carénage, par l'intermédiaire d'une dépression locale due au contournement du carénage de la nacelle par le flux d'air en écoulement. Plus le débit d'air admis dans le système propulsif augmente, autrement dit plus la section de sortie du carénage de la nacelle augmente, plus cette dépression est importante et, par conséquent, plus la poussée engendrée est grande.

Toutefois, à haute vitesse, le rendement propulsif d'un rotor caréné est moindre. En effet, lorsque la vitesse d'avancement de l'aéronef augmente, la performance du rotor caréné diminue en raison de l'augmentation rapide d'une trainée induite par la présence du carénage de la nacelle. De la sorte, selon le régime de rotation et la dimension du rotor, le rendement propulsif diminue.

Ainsi, avec un rotor caréné, le masquage de l'émission du bruit et la sécurité sur le périmètre du rotor sont privilégiés au détriment du rendement propulsif en croisière de l'aéronef, c'est-à-dire à grande vitesse d'avancement.

En revanche, pour un système propulsif à rotor libre (sans carénage de nacelle autour du rotor), il n'y a pas de trainée induite par un éventuel carénage de la nacelle, de sorte que lorsque la vitesse d'avancement de l'aéronef est importante, le rendement propulsif est optimal autorisant notamment des altitudes d'opération de vol plus élevées, ou permettant encore de disposer d'une endurance de vol plus élevée.

Cependant, l'absence de carénage autour des rotors induit des émissions sonores plus importantes et par conséquent une importante nuisance sonore. De plus, les pales du rotor ne sont alors plus protégées ce qui augmente le risque de percuter un obstacle et diminue ainsi la sécurité du rotor, ce qui est notamment risqué ou nuisible lors des phases de vol proche du sol ou d'une structure d'atterrissage. Enfin, sans présence de carénage de nacelle, le bénéfice de l'effet de poussée du carénage de la nacelle en vol stationnaire ou à faible vitesse d'avancement est également perdu pour un rotor libre.

Ainsi, les rotors libres et les rotors carénés présentent des avantages complémentaires. En effet, il est opportun de pouvoir combiner le bénéfice de l'effet de poussée du carénage de la nacelle tout en diminuant les nuisances sonores pendant les phases de vol à faible vitesse d'avancement ou en vol stationnaire en équipant le système propulsif d'un carénage de nacelle faisant office d'écran à l'aplomb des rotors et, le bénéfice d'un système propulsif à rotor libre présentant un meilleur rendement pour des phases de vols à vitesse d'avancement plus importante ou lorsque l'environnement de vol ne présente pas de contraintes de protection du rotor ou relatif à la nuisance sonore.

Dans la technique actuelle, il existe des turbomachines présentant un capot réglable en amont d'un carénage de nacelle entourant un rotor de la turbomachine (dans le sens d'écoulement d'un flux d'air en fonctionnement de la turbomachine). Ce capot est configuré pour coulisser de manière axiale par rapport à un axe longitudinal de la turbomachine afin de faire varier la géométrie d'entrée du carénage de la nacelle et ainsi fournir une augmentation de la poussée et une réduction de bruit. Le capot comprend une pluralité de segments pouvant être étendus radialement vers l'extérieur en amont du carénage de la nacelle et rétractés par rapport à l'axe longitudinal de la turbomachine, de sorte qu'à basse vitesse, lors des décollages ou lors des atterrissages d'un aéronef équipé d'une telle turbomachine, le capot est complètement sorti tandis qu'à haute vitesse, le capot est complètement rentré.

Cette disposition, bien que répondant au problème d'optimisation de l'acoustique d'un rotor et des performances aérodynamiques en vol d'un aéronef, ne permet pas de répondre à tous les problèmes susmentionnés, une nacelle à carénage étant toujours présente autour du rotor induisant alors une trainée supplémentaire à grande vitesse d'avancement.

Il a également été proposé des carénages de nacelles de rotor pour aéronef partiellement rétractables de manière circonférentielle autour du rotor. Un tel carénage de nacelle comprend une paroi fixe et une paroi mobile configurée pour se déplacer par rapport à la paroi fixe de sorte à découvrir, en partie, le rotor, notamment pendant des phases d'atterrissage d'un aéronef, afin de limiter une garde au sol du rotor, la partie de rotor découverte étant dirigée vers le sol. Toutefois, la portion angulaire de rétraction de carénage de la nacelle reste mineure par rapport à la portion angulaire de carénage de nacelle qui reste fixe autour du rotor de sorte que cette solution ne permet pas non plus de répondre aux problèmes susmentionnés.

Il existe donc un besoin de fournir une solution simple et efficace aux problèmes évoqués ci-dessus.

Un but de la présente invention est de proposer une solution permettant d'adapter simplement et rapidement les systèmes propulsifs des aéronefs afin d'optimiser leurs performances aéronautiques et acoustiques, selon les phases de vols et l'environnement dans lequel ils évoluent, tout en assurant la sécurité des rotors.

### Résumé de l'invention

A cet effet, l'invention concerne un système propulsif pour un aéronef, comprenant au moins un rotor et une nacelle présentant un carénage s'étendant autour dudit au moins un rotor, ce carénage de nacelle étant sectorisé et comportant au moins un secteur fixe et des secteurs rétractables en direction circonférentielle par rapport à un axe de rotation du rotor, caractérisé en ce que les secteurs rétractables comprennent au moins une première série de secteurs rétractables de manière télescopique dans ou sur ledit au moins un secteur fixe, et au moins une seconde série de secteurs rétractables de manière télescopique dans ou sur ledit au moins un secteur fixe, ledit au moins un secteur fixe ayant une étendue angulaire autour dudit axe qui est inférieure ou égale à 90°.

Le système propulsif selon l'invention permet ainsi de pouvoir bénéficier de manière simple et rapide, selon les besoins de l'aéronef, soit d'un rotor caréné, soit d'un rotor libre.

Selon un exemple de réalisation, les secteurs rétractables de la première série de secteurs sont rétractables de manière télescopique les uns à l'intérieur des autres et à l'intérieur dudit au moins un secteur fixe et les secteurs rétractables de la seconde série de secteurs sont rétractables de manière télescopique les uns à l'intérieur des autres et à l'intérieur dudit au moins un secteur fixe.

Avantageusement, les secteurs rétractables sont configurés pour qu'un déclenchement de leur rétractation soit asservi à des conditions prédéterminées de vol de l'aéronef ou à une commande volontaire d'un utilisateur.

Avantageusement, les secteurs rétractables ont une forme générale tubulaire et ont chacun des dimensions transversales qui diminuent d'une extrémité circonférentielle à une extrémité circonférentielle opposée permettant leur emboitement aisé les uns dans les autres en position rétractée tout en assurant leur entrainement télescopique lors de leur déploiement ou de leur rétractation. Cette forme tronconique assure également l'étanchéité entre deux secteurs adjacents.

Avantageusement, chacune des séries de secteurs comporte :
- un secteur d'extrémité ; et
- au moins un secteur intermédiaire ;
le secteur d'extrémité de la première série de secteurs comportant des moyens de guidage final et de verrouillage configurés pour coopérer avec des moyens de guidage final et de verrouillage complémentaires dont est muni le secteur d'extrémité de la seconde série de secteurs pour un verrouillage du carénage de nacelle en position fermée.

Ainsi, le carénage de la nacelle est maintenu en position déployée de manière sécurisée.

Avantageusement, au moins certains des secteurs comportent des moyens d'étanchéité, par exemple au niveau de leurs extrémités circonférentielles, configurés pour assurer une étanchéité avec un ou des secteur(s) adjacent(s).

Ces moyens d'étanchéité, en plus d'assurer l'étanchéité du carénage de la nacelle, autorisent l'alimentation en air chaud à l'intérieur des secteurs pour assurer un dégivrage si nécessaire.

Avantageusement, le système propulsif comporte un dispositif d'actionnement du déploiement et de la rétractation des secteurs de chaque série, ce dispositif comportant un système bidirectionnel d'entrainement à glissière pour le déploiement et la rétractation desdits secteurs de manière télescopique, à partir ou à l'intérieur du ou sur le secteur fixe.

Selon un exemple de réalisation avantageux, le système bidirectionnel d'entrainement comporte des pignons et des segments de crémaillère mis en mouvement par un même moteur électrique, le système bidirectionnel étant configuré pour engrainer un pignon sur au moins une crémaillère du secteur d'extrémité, puis, successivement, pour engrainer des pignons sur des crémaillères de chaque secteur intermédiaire, de proche en proche, depuis le secteur fixe dans le cas du déploiement du carénage de la nacelle ou jusqu'au secteur fixe dans le cas de la rétractation du carénage de la nacelle.

De préférence et avantageusement, les secteurs comportent au moins un segment de glissière présentant une section transversale en forme de U.

Ainsi, ils peuvent se déployer de manière circonférentielle assurant un bon déploiement du carénage de la nacelle également de manière circonférentielle.

La présente invention concerne encore un procédé de commande d'un carénage de nacelle d'un système propulsif pour un aéronef selon l'invention, à partir d'une position ouverte, respectivement fermée du carénage de ladite nacelle, caractérisé en ce que les secteurs rétractables sont déployés, respectivement emboités, en direction circonférentielle, par rapport à un axe de rotation du rotor, de manière télescopique, à partir, respectivement dans ou sur, dudit/ledit au moins un secteur fixe.

Selon un exemple de mise en oeuvre du procédé de commande selon l'invention, le déploiement du carénage de la nacelle, à partir d'une position d'ouverture du carénage de la nacelle, comprend les étapes suivantes :
- détection d'une condition de vol prédéterminée en commande automatique ou d'une commande manuelle de fermeture du carénage de la nacelle ;
- envoi d'une demande de déploiement des secteurs à un boitier de contrôle et de commande ;
- commande du système bidirectionnel d'entrainement en extension pour déployer le carénage de la nacelle selon une direction circonférentielle autour du rotor depuis le ou chaque secteur fixe ;
- verrouillage du carénage de la nacelle en position déployée par les moyens de verrouillage du ou de chaque secteur d'extrémité ;
- détection et avertissement à un utilisateur des conditions de verrouillage actif en position déployée.

Avantageusement, la condition de vol prédéterminée de commande automatique de fermeture du carénage de la nacelle est une phase de vol stationnaire de l'aéronef ou une vitesse d'avancement de l'aéronef inférieure ou égale à 180 km/h.

Selon un autre exemple de mise en œuvre du procédé de commande selon l'invention, la rétractation du carénage de la nacelle, à partir d'une position de fermeture de carénage de la nacelle, comprend les étapes suivantes :
- détection d'une condition de vol prédéterminée en commande automatique ou d'une commande manuelle d'ouverture du carénage de la nacelle ;
- envoi d'une demande de rétractation des secteurs à un boitier de contrôle et de commande ;
- commande du système bidirectionnel d'entrainement en contraction pour rétracter le carénage de la nacelle selon une direction circonférentielle autour du rotor jusqu'à imbrication complète des secteurs dans le ou chaque secteur fixe ;
- verrouillage du carénage de la nacelle en position rétractée ;
- détection et avertissement à un utilisateur des conditions de verrouillage actif en position rétractée.

Avantageusement, la condition de vol prédéterminée de commande automatique d'ouverture du carénage de la nacelle est une vitesse d'avancement de l'aéronef supérieure à 180 km/h.

Comme indiqué précédemment, le passage d'un système propulsif à rotor libre ou caréné est simple, rapide et sécurisé.

La présente invention concerne enfin un aéronef caractérisé en ce qu'il comporte au moins un système propulsif présentant l'une quelconque des caractéristiques susmentionnées, le système propulsif étant monté pivotant sur l'aéronef par l'intermédiaire d'un arbre de pivotement déporté ou traversant par rapport au rotor.

Ainsi, l'aéronef peut passer aisément d'un mode classique à un mode à décollage et à atterrissage vertical, s'adaptant ainsi aisément à l'environnement dans lequel il est destiné à évoluer.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue à caractère schématique en perspective d'un premier exemple de réalisation du système propulsif selon l'invention, montré avec une nacelle à carénage en position déployée, le système propulsif étant en position horizontale ;
[Fig. 2] La figure 2 est une vue analogue à la figure 1, illustrant le système propulsif en position verticale ;
[Fig. 3] La figure 3 est une vue analogue à la figure 1, montrant le carénage de la nacelle en cours de rétractation ;
[Fig. 4] La figure 4 est une vue analogue à la figure 1 dans laquelle le carénage de la nacelle est presque complètement rétracté ;
[Fig. 5] La figure 5 est une vue à caractère schématique d'un aéronef équipé de systèmes propulsifs selon l'invention dont les nacelles sont montrées avec leur carénage en position déployée autour des rotors ;
[Fig. 6] La figure 6 est une vue analogue à la figure 5 dans laquelle certaines nacelles sont montrées avec leur carénage en position rétractée et d'autres sont montrées avec leur carénage en position déployée ;
[Fig. 7] La figure 7 est une vue à caractère schématique en perspective d'un second exemple de réalisation du système propulsif selon l'invention, montré avec une nacelle avec un carénage en position déployée, le système propulsif étant montré en position horizontale ;
[Fig. 8] La figure 8 est une vue analogue à la figure 7 dans laquelle le carénage de la nacelle est presque complètement rétracté ;
[Fig. 9a] La figure 9a est une vue à caractère schématique montrant l'emboitement de deux secteurs adjacents du carénage de la nacelle ;
[Fig. 9b] La figure 9b est une vue de détail en coupe à caractère schématique et non dimensionnée montrant les bourrelets d'entrainement de deux secteurs adjacents du carénage de la nacelle ;
[Fig. 10] La figure 10 est une vue de détail à caractère schématique d'un exemple de réalisation du secteur d'extrémité ;
[Fig. 11] La figure 11 est une vue de détail à caractère schématique montrant un ensemble de secteurs du carénage de la nacelle et leur système d'entrainement selon l'invention ;
[Fig. 12] La figure 12 est une vue en perspective montrant un ensemble de segments de glissière du système d'entrainement selon l'invention en position déployée ;
[Fig. 13] La figure 13 est une vue de détail partielle en coupe et de face montrant les segments de glissière du système d'entrainement selon l'invention en position rétractée ;
[Fig. 14] La figure 14 est une vue de détail illustrant le système de pignon à rattrapage de jeu du système d'entrainement illustré à la figure 11 ;
[Fig. 15] La figure 15 est une vue de détail illustrant le dispositif de rattrapage de décalage de denture du système de pignons/crémaillères selon l'invention.

### Description détaillée de l'invention

Dans le présent exposé, les termes « distal » et « proximal » sont utilisés en référence au positionnement des secteurs de chaque série par rapport au secteur fixe de cette série. Les termes « interne » et « externe » sont utilisés en référence aux éléments constitutifs de chaque secteur.

Un système propulsif est généralement constitué :
- d'une nacelle ;
- d'un moteur et de son système de commande et de contrôle ;
- et, dans le cas d'une propulsion à hélice ou rotor, de son hélice ou rotor(s).

La nacelle est l'élément qui permet d'intégrer le moteur à l'aéronef, elle est constituée :
- de carénages (permettant de capoter le moteur, de caréner les rotors, de capter l'air en écoulement en fonctionnement de l'aéronef, de créer un effet de poussée, inverser la poussée sur les turboréacteurs, ...) ;
- d'équipements à monter sur le moteur (tel l'habillage moteur regroupant les réseaux électriques, hydrauliques, pneumatiques connus sous l'acronyme EBU de l'anglais Engine Build-up Unit) ; et
- des systèmes d'accrochage à l'aéronef.

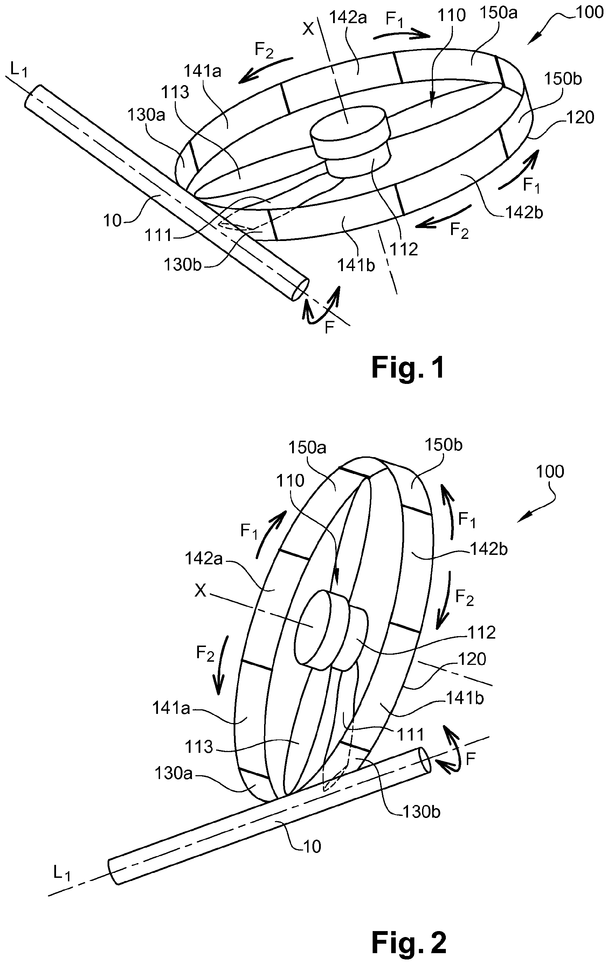

Les figures 1 à 4 illustrent, de manière simplifiée, un premier mode de réalisation d'un système propulsif 100 pour aéronef selon l'invention.

Le système propulsif 100 comprend ici au moins un rotor 110 et un carénage 120 de nacelle s'étendant autour dudit au moins un rotor 110. Le système propulsif 100 peut être monté fixe sur l'aéronef 1. Le système propulsif 100 peut encore être monté sur un arbre de pivotement 10, déporté par rapport à un axe de rotation X du rotor 110. L'arbre de pivotement 10 est fixé par tout moyen au système propulsif 100, d'une part, et à l'aéronef 1, d'autre part, et permet l'orientation du système propulsif 100 sur l'aéronef 1, autorisant le basculement du système propulsif 100 autour d'un axe longitudinal L1 de l'arbre de pivotement 10, selon la flèche F, par l'intermédiaire d'actionneurs connus, entre une position horizontale telle qu'illustrée à la figure 1, et une position verticale telle qu'illustrée à la figure 2. Ce basculement permet de faire passer l'aéronef 1 d'un mode classique comme pour un avion, à un mode VTOL ou hélicoptère.

Le rotor 110 du système propulsif 100 est relié à l'aéronef 1 par un mât 111 supportant un moteur 112, par exemple électrique, entrainant en rotation le rotor 110 par l'intermédiaire d'un arbre de puissance, de manière connue en soi. Selon l'exemple illustré nullement limitatif, chaque rotor 110 comprend deux pales 113.

Le carénage 120 de la nacelle est sectorisé en une pluralité de secteurs. Selon l'exemple illustré aux figures 1 à 4, le carénage 120 de la nacelle est sectorisé en huit secteurs divisés en deux séries, les secteurs relatifs à une première série de secteurs seront désignés par la lettre « a » et les secteurs relatifs à une seconde série de secteurs seront désignés par la lettre « b ».

Ainsi, le carénage 120 de la nacelle comprend :
- deux secteurs fixes 130a, 130b ;
- quatre secteurs intermédiaires 141a, 142a, 141b, 142b ; et
- deux secteurs d'extrémité 150a, 150b.

Les secteurs sont ainsi regroupés par série, une première série comprenant un secteur fixe 130a, deux secteurs intermédiaires 141a, 142a et un secteur d'extrémité 150a et une seconde série comprenant un secteur fixe 130b, deux secteurs intermédiaires 141b, 142b et un secteur d'extrémité 150b. La première série et la seconde série sont configurées pour coopérer ensemble de sorte à constituer le carénage 120 de la nacelle.

Le carénage 120 de la nacelle du système propulsif 100 peut être monté directement sur une section de voilure ou un fuselage de l'aéronef 1, ou sur l'arbre de pivotement 10, par l'intermédiaire de ses secteurs fixes 130a, 130b.

Les secteurs intermédiaires et les secteurs d'extrémités sont rétractables en direction circonférentielle par rapport à l'axe de rotation X du rotor 110. Plus précisément, selon un premier exemple de réalisation, le secteur d'extrémité 150a est rétractable de manière télescopique à l'intérieur du secteur intermédiaire distal 142a, qui lui-même est rétractable de manière télescopique à l'intérieur du secteur intermédiaire proximal 141a, qui lui-même est rétractable de manière télescopique à l'intérieur du secteur fixe 130a. De même, le secteur d'extrémité 150b est rétractable de manière télescopique à l'intérieur du secteur intermédiaire distal 142b, qui lui-même est rétractable de manière télescopique à l'intérieur du secteur intermédiaire proximal 141b, qui lui-même est rétractable de manière télescopique à l'intérieur du secteur fixe 130b.

Selon un autre exemple de réalisation (non représenté), les secteurs sont rétractables les uns sur les autres et sur le secteur fixe. Autrement dit, le secteur d'extrémité 150a est rétractable de manière télescopique sur le secteur intermédiaire distal 142a, qui lui-même est rétractable de manière télescopique sur le secteur intermédiaire proximal 141a, qui lui-même est rétractable de manière télescopique sur le secteur fixe 130a. De même, le secteur d'extrémité 150b est rétractable de manière télescopique sur le secteur intermédiaire distal 142b, qui lui-même est rétractable de manière télescopique sur le secteur intermédiaire proximal 141b, qui lui-même est rétractable de manière télescopique sur le secteur fixe 130b.

Dans la suite du présent exposé, la rétractation est présentée (en référence aux dessins) selon le mode de réalisation dans lequel les secteurs rétractables sont configurés pour être rétractés, de manière télescopique, les uns à l'intérieur des autres, du plus distal vers le plus proximal puis dans le secteur fixe, sans pour autant être limitatif.

Il pourrait être envisagé de n'avoir qu'un seul secteur fixe 130ab commun aux séries « a » et « b » en remplacement des deux secteurs fixes 130a et 130b, le carénage 120 de la nacelle étant alors sectorisé en sept secteurs.

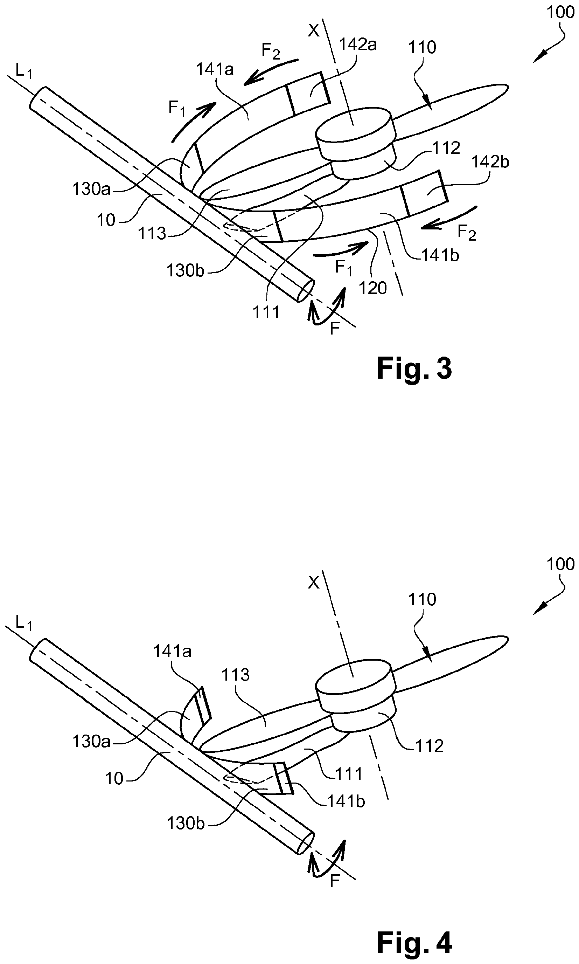

Ainsi, le carénage 120 de la nacelle peut passer d'une position entièrement déployée autour du rotor comme illustrée aux figures 1 et 2, à une position entièrement rétractée telle qu'illustrée à la figure 4, le rotor 110 étant alors assimilable à un rotor libre. En effet, dans cet exemple, la somme des étendues angulaires des secteurs fixes 130a, 130b autour de l'axe X de rotation du rotor 110 est inférieure ou égale à 90° de sorte qu'en position rétractée du carénage 120 de la nacelle, le rotor 110 du système propulsif 100 est assimilé à un rotor libre.

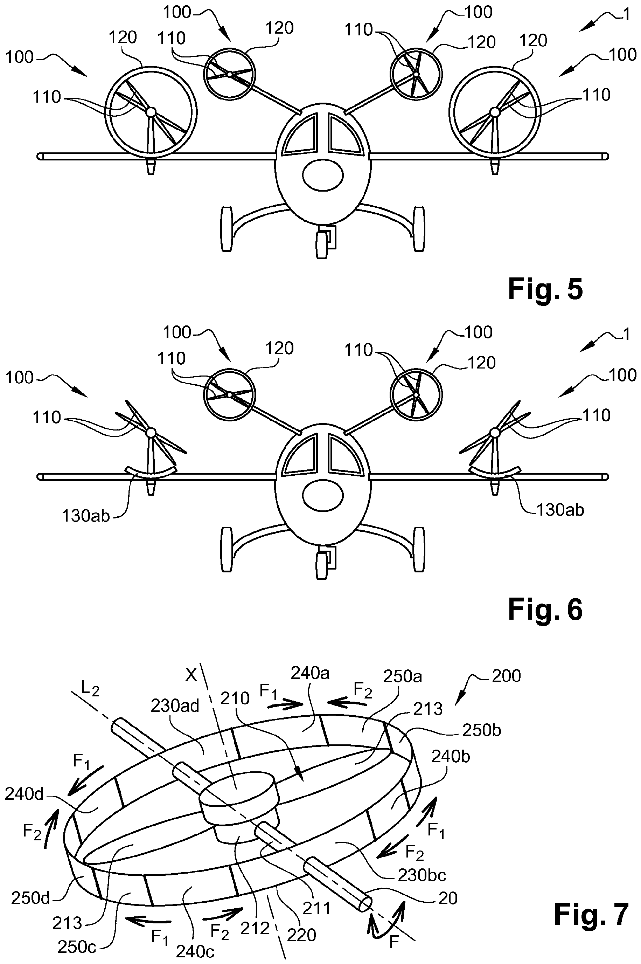

Les figures 5 et 6 illustrent un aéronef 1 comprenant quatre systèmes propulsifs 100 à rotors 110 doubles contrarotatifs. En référence à la figure 5, systèmes propulsifs 100 sont tous présentés avec un carénage 120 de nacelle entièrement déployé autour des rotors 110. En référence à la figure 6, deux systèmes propulsifs 100 sont présentés avec un carénage 120 de nacelle toujours entièrement déployé autour de leurs rotors 110 respectifs, tandis que deux autres systèmes propulsifs 100 sont présentés avec un carénage 120 de nacelle dont les secteurs rétractables sont entièrement rétractés à l'intérieur des secteurs fixes 130ab.

L'aéronef 1 est ici illustré en mode classique, autrement dit en mode de vol en translation ou mode « avion ». Toutefois, l'arbre de pivotement 10 permet à l'aéronef 1 de passer en mode VTOL (mode de vol vertical), assurant ainsi la sustentation de l'aéronef.

Dans les exemples illustrés, certains des systèmes propulsifs 100 sont montés sur l'extrados des ailes de l'aéronef 1. Toutefois, ces systèmes propulsifs pourraient également être montés sur l'intrados des ailes de l'aéronef 1.

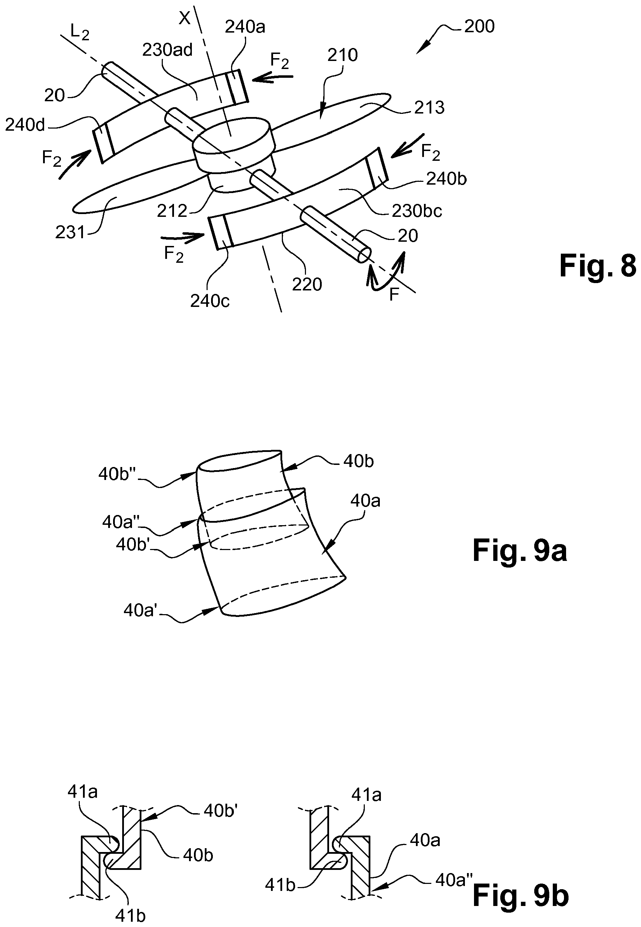

Les figures 7 et 8 illustrent un second mode de réalisation d'un système propulsif 200 pour aéronef selon l'invention.

De manière analogue au premier mode de réalisation, le système propulsif 200 comprend ici au moins un rotor 210 et un carénage 220 de nacelle s'étendant autour dudit au moins un rotor 210. Le système propulsif 200 peut être monté fixe sur l'aéronef. Le système propulsif 200 peut encore être monté sur un arbre de pivotement 20, traversant le rotor 210 de manière perpendiculaire par rapport à un axe de rotation X du rotor 210. L'arbre de pivotement 20 est fixé par tout moyen au système propulsif 100, d'une part, et à l'aéronef, d'autre part, et permet l'orientation du système propulsif 200 sur l'aéronef, permettant le basculement du système propulsif 200 autour d'un axe longitudinal L2 de l'arbre de pivotement 20, selon la flèche F, par l'intermédiaire d'actionneurs connus, entre une position horizontale telle qu'illustrée aux figures 7 ou 8, et une position verticale (non représentée). Ce basculement permet de faire passer l'aéronef d'un mode classique comme pour un avion, à un mode VTOL ou hélicoptère.

Le rotor 210 du système propulsif 200 est relié à l'aéronef par un mât 211 supportant un moteur 212, par exemple électrique, entrainant en rotation le rotor 210 par l'intermédiaire d'un arbre de puissance, de manière connue en soi. Selon l'exemple de réalisation représenté, le mât 211 du rotor 210 est confondu avec l'arbre de pivotement 20. Selon l'exemple illustré nullement limitatif, chaque rotor 210 comprend deux pales 213.

Le carénage 220 de la nacelle est sectorisé en une pluralité de secteurs. Selon l'exemple illustré aux figures 7 et 8, le carénage 220 de la nacelle est sectorisé en dix secteurs divisés en quatre séries, désignés par les lettres « a », « b », « c » et « d ».

Ainsi, le carénage 220 de la nacelle comprend :
- deux secteurs fixes 230ad, 230bc ;
- quatre secteurs intermédiaires 240a, 240b, 240c et 240d ; et
- quatre secteurs d'extrémité 250a, 250b, 250c et 250d.

Les secteurs sont ainsi regroupés par série, une première série comprenant une portion du secteur fixe 230ad, un secteur intermédiaire 240a et un secteur d'extrémité 250a ; une seconde série comprenant une portion du secteur fixe 230bc , un secteur intermédiaire 240b et un secteur d'extrémité 250b ; une troisième série comprenant une portion du secteur fixe 230bc , un secteur intermédiaire 240c et un secteur d'extrémité 250c et une quatrième série comprenant une portion du secteur fixe 230ad, un secteur intermédiaire 240d et un secteur d'extrémité 250d. Les quatre séries sont configurées pour coopérer deux à deux de sorte à constituer le carénage 220 de la nacelle.

Dans ce mode de réalisation, le secteur fixe 230ad est commun aux séries de secteurs « a » et « d » et le secteur fixe 230bc est commun aux séries de secteurs « b » et « c ». Il pourrait être envisagé que chaque série ait un secteur fixe qui lui est propre, le carénage 220 de la nacelle étant alors sectorisée en douze secteurs.

Le carénage 220 de la nacelle du système propulsif 200 peut être monté directement sur une section de voilure ou un fuselage d'un aéronef, ou sur l'arbre de pivotement 20, par l'intermédiaire de ses secteurs fixes 230ad, 230bc.

Les secteurs intermédiaires et les secteurs d'extrémités sont rétractables en direction circonférentielle par rapport à un axe de rotation X du rotor 210. Plus précisément, selon un premier mode de réalisation nullement limitatif, le secteur d'extrémité 250a est rétractable, de manière télescopique, à l'intérieur du secteur intermédiaire 240a qui lui-même est rétractable de manière télescopique à l'intérieur du secteur fixe 230ad. De même, le secteur d'extrémité 250b est rétractable, de manière télescopique, à l'intérieur du secteur intermédiaire 240b qui lui-même est rétractable de manière télescopique à l'intérieur du secteur fixe 230bc ; le secteur d'extrémité 250c est rétractable de manière télescopique à l'intérieur du secteur intermédiaire 240c qui lui-même est rétractable de manière télescopique à l'intérieur du secteur fixe 230bc ; et le secteur d'extrémité 250d est rétractable de manière télescopique à l'intérieur du secteur intermédiaire 240d qui lui-même est rétractable de manière télescopique à l'intérieur du secteur fixe 230ad.

Comme mentionné précédemment, un autre mode de réalisation est envisagé, mais non représenté, dans lequel les secteurs rétractables 250a-240a et 250d-240d, respectivement 250b-240b et 250c-240c, sont rétractés de manière télescopique sur les secteurs fixes 230ad, respectivement 230bc.

Ainsi, le carénage 220 de la nacelle peut passer d'une position entièrement déployée autour du rotor comme illustrée à la figure 7, à une position entièrement rétractée telle qu'illustrée à la figure 8, le rotor 210 étant alors assimilable à un rotor libre. En effet, dans cet exemple, la somme des étendues angulaires des secteurs fixes 230ad, 230bc autour de l'axe X de rotation du rotor 210 est inférieure ou égale à 90° de sorte qu'en position rétractée du carénage 220 de la nacelle, le rotor 210 du système propulsif 200 est assimilé à un rotor libre.

Pour une facilité de compréhension, dans la suite du présent exposé commun aux deux modes de réalisation susmentionnés, les secteurs fixes seront désignés par la référence 30, les secteurs intermédiaires seront désignés par la référence 40 et les secteurs d'extrémité seront désignés par la référence 50.

Le nombre de secteurs constituant le carénage 120, 220 de la nacelle peut être choisi en fonction de contraintes aérodynamiques et mécaniques.

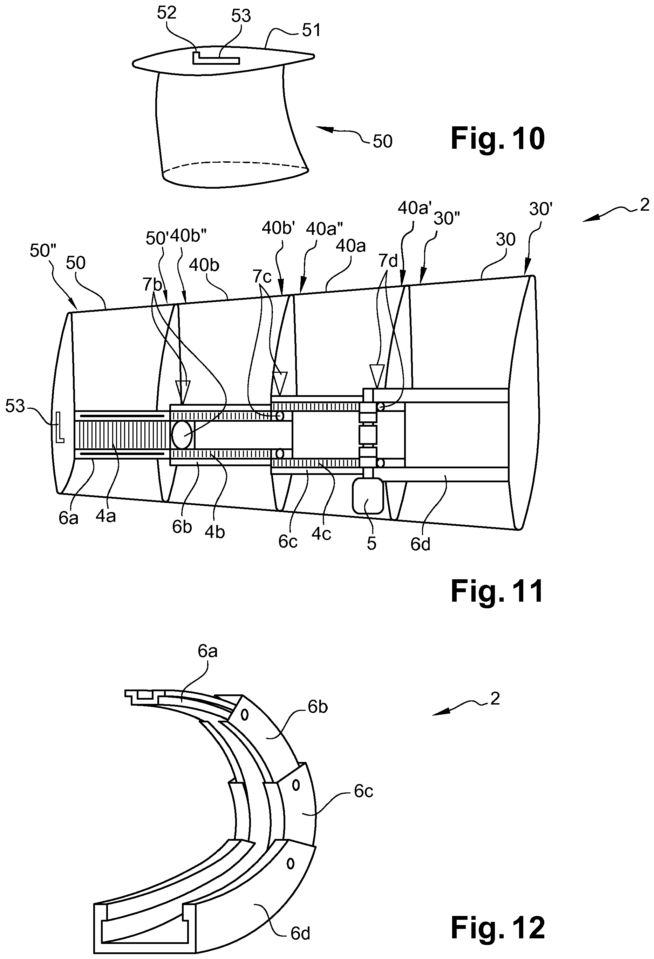

Les figures 9a, 9b et 10 illustrent des secteurs rétractables. Plus précisément, La figure 9a montre deux secteurs intermédiaires 40a, 40b, la figure 9b est une vue de détail de la figure 9a et la figure 10 montre un secteur d'extrémité 50.

Comme déjà précisé, les figures illustrent le mode de réalisation dans lequel les secteurs rétractables 50, 40a, 40c sont configurés pour être rétractés les un à l'intérieur des autres, du plus distal au plus proximal, et dans le secteur fixe 30. Toutefois, les caractéristiques ci-après détaillées peuvent être adaptées au mode de réalisation selon lequel les secteurs rétractables sont configurés pour être rétractés les un sur les autres, du plus distal vers le plus proximal, et sur le secteur fixe.

Les secteurs rétractables intermédiaires 40a, 40b et d'extrémité 50 ainsi que le secteur fixe 30, ont une forme générale tubulaire (présentant ainsi une cavité interne) présentant un axe principal longitudinal et des sections transversales.

Les secteurs 30, 40a, 40b et 50 ont chacun des dimensions transversales qui diminuent d'une extrémité circonférentielle dite proximale 30', 40a', 40b', 50', à une extrémité circonférentielle opposée dite distale 30", 40a", 40b", 50". Autrement dit, une section de l'extrémité circonférentielle proximale 30", 40a", 40b", 50", des secteurs 30, 40a, 40b, 50, présente des dimensions plus importantes qu'une section de l'extrémité circonférentielle distale 30', 40a', 40b', 50' des secteurs 30, 40a, 40b, 50, leur conférant ainsi une forme tronconique permettant leur emboitement aisé les uns dans les autres en position rétractée. Respectivement, dans le mode de réalisation où les secteurs rétractables s'emboitent les uns sur les autres et sur le secteur fixe, les secteurs ont chacun des dimensions transversales qui diminuent d'une extrémité circonférentielle, dite distale, à une extrémité circonférentielle opposée, dite proximale, leur conférant ainsi une forme tronconique permettant leur emboitement aisé les uns sur les autres en position rétractée.

Pour permettre cet emboitement, chaque secteur présente des dimensions inférieures aux dimensions du secteur dans lequel il est amené à être emboité. Respectivement, chaque secteur présente des dimensions supérieures aux dimensions du secteur sur lequel il est amené à être emboité. Par exemple, selon le premier mode de réalisation, le secteur intermédiaire distal 40b présente des dimensions inférieures à celles du secteur intermédiaire proximal 40a. Les secteurs rétractables 40a, 40b, 50 étant destinés à être tous emboités dans le secteur fixe 30, ce secteur fixe 30 est donc celui présentant les dimensions les plus grandes afin de contenir tous les autres secteurs en position rétractée. Et le secteur d'extrémité 50 est donc le secteur qui présente les dimensions les plus petites.

La forme tronconique des secteurs 30, 40a, 40b et 50 permet d'assurer leur entrainement télescopique lors de leur déploiement ou de leur rétractation. On entend par télescopique le fait que chaque secteur distal s'emboite, respectivement se déploie, dans un secteur adjacent proximal, respectivement à partir d'un secteur adjacent proximal, par coulissement du secteur distal dans le secteur proximal, respectivement par coulissement du secteur distal à partir du secteur proximal.

Les extrémités circonférentielles de chaque secteur présentent un bourrelet (figure 9b) assurant la solidarisation de deux secteurs adjacents entre eux lors des opérations de déploiement et de rétractation du carénage 120, 220 de la nacelle. Par exemple, le secteur intermédiaire 40a présente, sur une surface interne, au niveau de son extrémité circonférentielle distale 40a", un bourrelet annulaire 41a et le secteur intermédiaire 40b présente, sur une surface externe, au niveau de son extrémité circonférentielle proximale 40b', un bourrelet annulaire 41b, le bourrelet 41a du secteur 40a étant apte à coopérer avec le bourrelet 41b du secteur 40b pour assurer la solidarisation des secteurs 40a, 40b entre eux lors des opérations de déploiement et de rétractation du carénage 120, 220 de la nacelle. Cette solidarisation peut être réalisée selon tout autre moyen adapté.

Les secteurs rétractables 40a, 40b, 50 sont configurés pour que le déclenchement de leur déploiement ou de leur rétractation soit asservi à des conditions de vol de l'aéronef 1 ou à une action volontaire d'un utilisateur par commande, comme il sera décrit ci-après.

La forme tronconique des secteurs 30, 40a, 40b et 50 assure également l'étanchéité entre deux secteurs adjacents.

Avantageusement, les secteurs 30, 40a, 40b et 50 présentent un profil aérodynamique adapté à un écoulement de flux d'air en fonctionnement du système propulsif 100, 200.

Les secteurs 30, 40a, 40b et 50 constituant une portion angulaire d'un carénage 120, 220 d'une nacelle de forme annulaire, ils présentent également une forme incurvée.

Les secteurs 30, 40a, 40b et 50 sont réalisés en un matériau structurant présentant la robustesse nécessaire, tel que par exemple en alliage d'aluminium ou encore en composite fibres de carbone. Avantageusement, la structure constituant les secteurs 30, 40a, 40b et 50 peut également présenter des caractéristiques d'absorption d'émissions acoustiques afin de réduire le bruit du rotor 110,210 lorsque le carénage 120, 220 de la nacelle est déployé.

Le secteur d'extrémité 50 présente, à une extrémité distale, une platine 51 configurée pour venir en appui contre une platine d'un secteur d'extrémité d'une autre série de secteurs afin d'assurer le contact de deux séries de secteurs lors du déploiement du carénage 120, 220 de la nacelle. Pour guider les secteurs d'extrémité 50 de deux séries lors de leur mise en contact en fin de déploiement, chaque secteur d'extrémité 50 peut également comporter un dispositif de guidage terminal 52. Par exemple, ce dispositif de guidage 52 peut comporter un pion porté par le secteur d'extrémité 50 de l'une des séries, configuré pour coopérer avec une encoche portée par le secteur d'extrémité 50 de l'autre des séries.

Le secteur d'extrémité 50 de la première série de secteurs comporte également des moyens de verrouillage 53 configurés pour coopérer avec des moyens de verrouillage complémentaires dont est muni le secteur d'extrémité de la seconde série de secteurs, tels, par exemple, qu'un loquet électromécanique commandé électriquement, pour un verrouillage du carénage de la nacelle en position fermée et améliorant également l'étanchéité et l'aérodynamisme du carénage 120, 220 de la nacelle.

Toutefois, ce mode de réalisation implique la présence de câblage filaire à l'intérieur du carénage 120, 220 de la nacelle dont il faut prévoir un système d'enroulement ou de déroulement en même temps que les mouvements de déploiement et rétractation du carénage 120, 220 de la nacelle, ou encore de prévoir un jeu de piste électrique directement appliqué dans les éléments constitutifs du carénage 120, 220 de la nacelle (telles que par exemple les crémaillères qui seront décrites ci-après).

De la sorte, un autre exemple de réalisation préféré des moyens de verrouillage 53 est un loquet mécanique pour lequel l'application d'une première pression permet le verrouillage et l'application d'une seconde pression permet le déverrouillage.

Pour des raisons évidentes de sécurité, il est opportun de pouvoir s'assurer du bon verrouillage du carénage 120, 220 de la nacelle en position déployée. De la sorte, le système propulsif 100,200 peut encore comporter un dispositif de contrôle du bon verrouillage en position déployée du carénage 120, 220 de la nacelle tel que, par exemple, un switch analogique. Ce dispositif de contrôle peut encore avantageusement être configuré pour avertir un utilisateur ou un calculateur du verrouillage actif du carénage 120, 220 de la nacelle en position déployée. De même, si le switch analogique détecte un mauvais verrouillage du carénage 120, 220 de la nacelle en position déployée, une alerte (par exemple au moyen d'un dispositif sonore ou d'un voyant lumineux) pourrait être envoyée à un utilisateur de l'aéronef, par exemple sur un tableau de bord du cockpit de l'aéronef.

Pour améliorer d'avantage l'étanchéité du carénage de la nacelle, et notamment l'étanchéité entre deux secteurs adjacents, au moins certains des secteurs 30, 40a, 40b et 50 sont encore munis de moyens d'étanchéité (non représentés), par exemple au niveau de leurs extrémités circonférentielles.

Ces moyens d'étanchéité sont par exemple des joints à brosse disposés sur une surface externe de chaque secteur 30, 40a, 40b et 50 au niveau de leurs extrémités circonférentielles et configurés pour coopérer avec une surface interne de chaque secteur 30, 40a, 40b et 50 amenée en regard de ces joints à brosse lors du déploiement ou de la rétractation du carénage 120, 220 de la nacelle. Cette solution est préférée car en plus de permettre l'étanchéité avec un ou des secteurs adjacents, ces joints à brosse n'empêchent pas l'alimentation en air chaud de la cavité interne des secteurs tubulaires 30, 40a, 40b et 50, pour permettre leur dégivrage le cas échéant.

L'étanchéité pourrait encore être assurée par tout autre moyen ou encore par un ajustage précis des secteurs 30, 40a, 40b et 50, cette solution n'étant pas préférée.

Afin de permettre le déploiement télescopique des secteurs 30, 40a, 40b et 50 ou la rétractation par emboitement successif des secteurs 30, 40a, 40b et 50 deux à deux, chaque série de secteurs 30, 40a, 40b et 50 est muni d'un dispositif d'actionnement tel qu'un système bidirectionnel d'entrainement 2 à glissière du type vérin à crémaillère. Les figures 11 à 15 illustrent les détails d'un tel système bidirectionnel d'entrainement, pour un carénage 120, 220 présentant huit secteurs répartis en deux séries de quatre secteurs 30, 40a, 40b, 50, dans cet exemple.

Le système bidirectionnel d'entrainement 2 comprend une pluralité de pignons 3a, 3b, 3c et une pluralité de segments de crémaillère 4a, 4b, 4c solidaires, respectivement, de segments de glissière 6a, 6b, 6c.

Les couples de pignon-crémaillère sont mis en mouvement par un même moteur électrique 5.

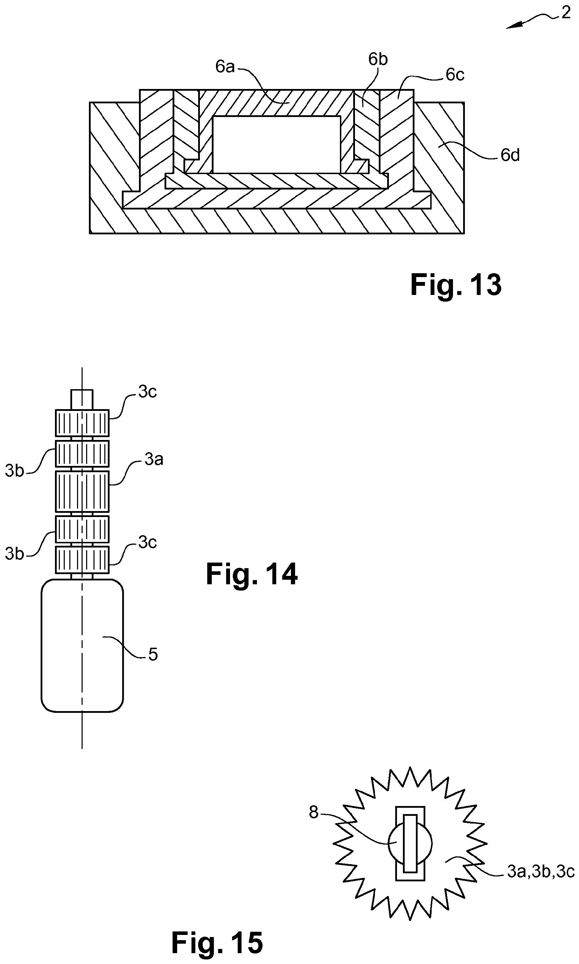

Comme cela est visible sur les figures 11 et 14, la crémaillère 4a du secteur d'extrémité 50 est à simple denture destinée à coopérer avec un pignon unique 3a. En revanche, la crémaillère 4b du secteur intermédiaire distal 40a est à double dentures et est destinée à coopérer avec deux pignons 3b. De même, la crémaillère 4c du secteur intermédiaire proximal 40b est à double dentures et est destinée à coopérer avec deux pignons 3c.

Le système bidirectionnel d'entrainement 2 est configuré pour s'étendre dans les cavités internes des secteurs tubulaires 30, 40a, 40b et 50. Le segment de glissière 6a est associé au secteur d'extrémité 50. Le segment de glissière 6b est associé au secteur d'extrémité distal 40a. Le segment de glissière 6c est associé au secteur d'extrémité proximal 40b. Un dernier segment de glissière 6d est associé au secteur fixe 30. Cependant, plusieurs segments de glissière pourraient être attribués à un même secteur.

Comme cela est visible sur la figure 11, les segments de glissière 6a, 6b, 6c, 6d sont concentriques. Ils présentent une section transversale en forme de U et sont courbés de sorte à suivre la forme incurvée des secteurs 30, 40a, 40b et 50. Les segments de glissières 6a, 6b, 6c, 6d sont dimensionnés et configurés pour pouvoir s'emboiter deux à deux, par coulissement l'un dans l'autre.

Les segments de glissières 6a, 6b, 6c, 6d peuvent avantageusement être dimensionnés pour assurer une tenue mécanique du carénage 120, 220 dans toutes ses configurations lorsqu'il est soumis à des efforts aérodynamiques, gravitationnels et dynamiques.

Avantageusement, les surfaces de ces segments de glissière en mouvement relatif les unes par rapport aux autres peuvent être revêtues d'un revêtement autolubrifiant afin de prévenir les risques de coincement ou d'usure excessive.

Les segments de crémaillère 4a, 4b, 4c sont dimensionnés et configurés pour pouvoir s'emboiter deux à deux par coulissement l'un dans l'autre, à l'image des secteurs 30, 40a, 40b et 50.

Le système bidirectionnel 2 est dimensionné et configuré pour éviter tout risque de contact avec les rotors 110, 210 lors du déploiement ou de la rétractation du carénage 120, 220 de la nacelle.

Le système bidirectionnel 2 est configuré pour actionner les pignons 3a, 3b et 3c solidaires en rotation du moteur électrique 5 par l'intermédiaire d'un même arbre. Le pignon 3a du secteur d'extrémité 50 engraine sur le segment de crémaillère 4a pour l'entrainement du segment de glissière 6a associé, puis, successivement, les pignons de chaque secteur intermédiaire 40a, 40b, de proche en proche, du plus distal vers le plus proximal, depuis le secteur fixe 30 dans le cas du déploiement du carénage 120, 220 de la nacelle ou jusqu'au secteur fixe 30 dans le cas de la rétractation du carénage 120, 220 de la nacelle. Autrement dit, le pignon 3b du secteur intermédiaire distal 40b engraine sur le segment de crémaillère 4b pour l'entrainement du segment de glissière 6b associé, puis , le pignon 3c du secteur intermédiaire proximal 40a engraine sur le segment de crémaillère 4c pour l'entrainement du segment de glissière 6c associé.

Le segment de glissière 6d associé au secteur fixe 30 n'étant quant à lui couplé à aucune crémaillère ni aucun pignon, demeure immobile.

Le système bidirectionnel d'entrainement 2 comprend encore des moyens de verrouillage 7b, 7c, 7d en position déployée des segments de glissière 6a, 6b, 6c et, par conséquent, des secteurs rétractables 40a, 40b, 50. Ces moyens de verrouillage comprennent par exemple des moyens mécaniques comprenant deux éléments configurés pour coopérer (du type came et cliquet ou pion et encoche) et sont disposés, pour l'un des éléments, à une extrémité proximale des segments de crémaillère 4a, 4b 4c et, pour l'autre des éléments, à une extrémité distale des segments de glissière 6b, 6c, 6d, permettant ainsi de solidariser ou de débloquer mécaniquement les segments de crémaillère associés à des secteurs adjacents. Ce moyens de verrouillage 7b, 7c, 7d peuvent encore être du type électromécanique.

Le déploiement et la rétractation des segments de glissière 6a, 6b, 6c et donc des secteurs 30, 40a, 40b, 50 s'effectue de façon séquentielle par verrouillage successif des segments adjacents par les dispositifs de verrouillage 7b, 7c, 7d.

Ainsi, lors du déploiement des secteurs 30, 40a, 40b, 50 autour des rotors 110, 210, le moteur électrique 5 tourne dans un premier sens et entraine en rotation l'ensemble des pignons 3a, 3b, 3c. Dans un premier temps, le pignon 3a engraine sur la denture du segment de crémaillère 4a pour l'entrainement du segment de glissière 6a associé hors du segment de glissière 6b jusqu'à ce que le segment de glissière 6a soit solidarisé au segment de glissière 6b par le moyen de verrouillage 7b. Ensuite, les pignons 3b engrainent sur les dentures du segment de crémaillère 4b pour l'entrainement des segments de glissières 6a et 6b solidarisés et notamment entrainant le segment de glissière 6b hors du segment de glissière 6c, jusqu'à ce que le segment de glissière 6b soit solidarisé au segment de glissière 6c par le moyen de verrouillage 7c. Et enfin, les pignons 3c engrainent sur les dentures du segment de crémaillère 4c pour l'entrainement des segments de glissières 6a, 6b et 6c solidarisés et notamment entrainant le segment de glissière 6c hors du segment de glissière 6d, jusqu'à ce que le segment de glissière 6c soit solidarisé au segment de glissière 6d par le moyen de verrouillage 7d.

De même, lors de la rétractation des secteurs 30, 40a, 40b, 50 autour des rotors 110, 210, le moteur électrique 5 tourne dans un second sens opposé au premier sens et entraine en rotation l'ensemble des pignons 3a, 3b, 3c. Dans un premier temps, le moyen de verrouillage 7d est déverrouillé et les pignons 3c engrainent sur les dentures du segment de crémaillère 4c pour l'entrainement des segments de glissières 6a, 6b et 6c solidarisés par les moyens de verrouillage 7b et 7c, jusqu'à ce que le segment de glissière 6c soit rétracté dans le segment de glissière 6d. Ensuite, le moyen de verrouillage 7c est déverrouillé et les pignons 3b engrainent sur les dentures du segment de crémaillère 4b pour l'entrainement des segments de glissières 6a et 6b solidarisés par le moyen de verrouillage 7b, jusqu'à ce que le segment de glissière 6b soit rétracté dans le segment de glissière 6c. Et enfin, le moyen de verrouillage 7b est déverrouillé et le pignon 3a engraine sur la denture du segment de crémaillère 4a pour l'entrainement du segment de glissière 6a jusqu'à ce que le segment de glissière 6a soit rétracté dans le segment de glissière 6b.

Les pignons 3a, 3b, 3c peuvent avantageusement comporter un système de rattrapage de décalage de denture 8 connu en soi, ce qui permet de n'avoir qu'un seul arbre de rotation pour l'ensemble des pignons 3a, 3b et 3c. Par exemple, système de rattrapage de décalage de denture 8 comporte des goupilles en butée dans des gorges dont sont munis les pignons 3a, 3b et 3c.

Le déploiement et la rétractation des secteurs autour des rotors 110, 210 pourraient également être réalisés par d'autre méthodes, telles que par exemple au moyen de systèmes pneumatiques dédiés.

Ainsi, le déploiement du carénage 120, 220 de la nacelle d'un système propulsif 100,200 à partir d'une position d'ouverture de le carénage 120, 220 de la nacelle (autrement dit lorsque les secteurs rétractables 40a, 40b et 50 du carénage 120, 220 de la nacelle sont entièrement emboités dans les secteurs fixes 30) peut se faire soit sur commande manuelle, soit automatiquement, par détection d'une condition de vol prédéterminée nécessitant de faire passer le système propulsif 100, 200 d'une configuration à rotors libres, à une configuration à rotors carénés. En effet, si la nuisance sonore doit être diminuée parce que l'aéronef 1 survole une zone d'habitation ou un environnement comportant des obstacles pouvant présenter un risque pour les rotors, un utilisateur peut actionner manuellement le déploiement du carénage 120, 220 de la nacelle. En mode automatique, le déploiement du carénage 120, 220 de la nacelle peut être déclenché si une phase de vol stationnaire est détectée, autrement dit si l'aéronef 1 est immobile dans les airs, en sustentation sans support ni soutien, ou lorsqu'une vitesse d'avancement faible de l'aéronef 1 est détectée, signifiant qu'un effet de poussée du carénage de la nacelle doit être privilégié. la fermeture du carénage 120, 220 de la nacelle peut être déclenché en mode automatique si la vitesse d'avancement de l'aéronef 1 est inférieure ou égale à 180 km/h.

Ainsi, lorsqu'une telle commande manuelle ou lorsqu'une telle condition est détectée, une demande de déploiement des secteurs 40a, 40b et 50 est envoyée à un boitier de contrôle et de commande qui commande le système bidirectionnel d'entrainement 2 en extension pour déployer le carénage 120, 220 de la nacelle.

Les couples de pignons-crémaillères 3a-4a, 3b-4b et 3c-4c sont mis en mouvement comme décrit précédemment.

Par conséquent les secteurs 40a, 40b, 50 sont déployés selon une direction circonférentielle autour du rotor 110, 210 (dans le sens des flèches F1 sur les figures 1 à 4 et 7 et 8) à partir du secteur d'extrémité 50 qui coulisse hors du secteur intermédiaire distal 40a, puis le secteur intermédiaire distal 40a coulisse hors du secteur intermédiaire proximal 40b et enfin le secteur intermédiaire proximal 40b coulisse hors du secteur fixe 30.

Les secteurs rétractables se déploient ainsi jusqu'au contact des secteurs d'extrémité 50 de chaque série de secteurs configurées pour coopérer deux à deux. En fin de course de déploiement, les moyens de guidage 52 des secteurs d'extrémités 50 guident ces derniers pour amener leur platine 51 respective en regard l'une de l'autre. Les moyens de verrouillage 53 de chaque secteur d'extrémité 50 sont ensuite actionnés pour réaliser le verrouillage du carénage 120, 220 de la nacelle en position de fermeture. Le rotor 110, 210 étant alors un rotor caréné.

De même, la rétractation du carénage 120, 220 de la nacelle d'un système propulsif 100,200 à partir d'une position de fermeture du carénage 120, 220 de la nacelle (autrement dit lorsque le carénage de la nacelle est complètement déployé autour du rotor 110, 210) peut se faire soit sur commande manuelle, soit automatiquement, par détection d'une condition de vol prédéterminée nécessitant de faire passer le système propulsif 100, 200 d'une configuration à rotors carénés, à une configuration à rotors libres, par exemple, lorsqu'une vitesse d'avancement importante de l'aéronef 1 est détectée, signifiant qu'un rendement propulsif des rotors doit être privilégié. Selon un exemple de réalisation, la rétractation ou l'ouverture du carénage 120, 220 de la nacelle peut être déclenché en mode automatique si la vitesse d'avancement de l'aéronef 1 est supérieure à 180 km/h.

Ainsi, lorsqu'une telle commande manuelle ou lorsqu'une telle condition est détectée, les moyens de verrouillages 53 des secteurs d'extrémités 50 sont déverrouillés pour permettre la séparation des séries de secteurs jusqu'alors liées par leur secteur d'extrémité respectif 50. Une demande de rétractation des secteurs 40a, 40b et 50 est alors envoyée à un boitier de contrôle et de commande qui commande le système bidirectionnel d'entrainement 2 en contraction pour rétracter le carénage 120, 220 de la nacelle.

Les couples de pignons-crémaillères 3a-4a, 3b-4b et 3c-4c sont mis en mouvement comme décrit précédemment.

Par conséquent les secteurs 40a, 40b, 50 sont rétractés selon une direction circonférentielle autour du rotor 110, 210 (dans le sens des flèches F2 sur les figures 1 à 4 et 7 et 8) à partir du secteur d'extrémité 50 qui s'emboite dans le secteur intermédiaire distal 40a, puis le secteur intermédiaire distal 40a s'emboite dans intermédiaire proximal 40b et enfin le secteur intermédiaire proximal 40b s'emboite dans le secteur fixe 30.

Lorsque les secteurs rétractables 40a, 40b et 50 d'une série sont tous emboités les uns dans les autres et dans le secteur fixe 30 de cette série, le rotor 110, 210 est alors assimilé à un rotor libre.

Le système propulsif 100, 200 selon l'invention comprend encore des moyens de verrouillage en position d'ouverture du carénage 120, 220 de la nacelle, autrement dit lorsque les secteurs rétractables 40a, 40b et 50 d'une série sont tous emboités les uns dans les autres et dans le secteur fixe 30 de cette série. Ces moyens sont par exemple des moyens mécaniques complémentaires portés par le secteur fixe 30 et le secteur d'extrémité 50, ces moyens complémentaires étant alors configurés pour solidariser le secteur d'extrémité 50 au secteur fixe 30, et par conséquent également tous les secteurs intermédiaires. Une autre solution de verrouillage en position rétractée des secteurs serait de bloquer en rotation le moteur électrique 5.

Là encore, pour des raisons évidentes de sécurité, il est opportun de pouvoir s'assurer du bon verrouillage du carénage 120, 220 de la nacelle en position rétractée. De la sorte, un dispositif de contrôle tel qu'un switch analogique peut encore avantageusement équiper le système propulsif 100,200 et être configuré pour avertir un utilisateur ou un calculateur du verrouillage actif du carénage 120, 220 de la nacelle en position rétractée. De même, si le switch analogique détecte un mauvais verrouillage du carénage 120, 220 de la nacelle en position rétractée, une alerte (par exemple au moyen d'un dispositif sonore ou d'un voyant lumineux) pourrait être envoyée à un utilisateur de l'aéronef, par exemple sur un tableau de bord du cockpit de l'aéronef.

Le système propulsif 100, 200 selon l'invention permet ainsi de pouvoir bénéficier de manière simple et rapide, selon les besoins de l'aéronef 1, soit de rotors carénés, soit de rotors libres. Lorsque le carénage 120, 220 de la nacelle est déployé autour des rotors 110, 210, on retrouve un carénage complet du rotor. Le carénage 120, 220 de la nacelle, du système propulsif 100,200 selon l'invention permet ainsi, par sa forme, sa construction et les matériaux dont il est constitué, d'agir comme un écran acoustique contre le bruit émanant de la rotation des rotors 110, 210, garant d'une meilleure atténuation des émissions acoustiques mais également d'une sécurité accrue des rotors par rapport à d'éventuels obstacles tout en bénéficiant de l'effet de poussée du carénage de la nacelle utile en vol stationnaire ou à faible vitesse d'avancement. Lorsque le carénage 120, 220 de la nacelle est rétracté dans les secteurs fixes, la trainée induite par la présence d'un éventuel carénage de nacelle est quasiment éliminée et le rendement propulsif à haute vitesse d'avancement est grandement amélioré, les rotors 110, 210 se trouvant ainsi libérés.

Ainsi, l'aéronef selon l'invention présente l'avantage intéressant de pouvoir disposer, selon les besoins, de rotors carénés ou de rotors libres.

## Revendications

1. Système propulsif (100, 200) pour un aéronef (1), comprenant au moins un rotor (110, 210) et une nacelle présentant un carénage (120, 220) s'étendant autour dudit au moins un rotor (110, 210), ce carénage (120, 220) de nacelle étant sectorisé et comportant au moins un secteur fixe (30, 130a, 130b, 130ab, 230ad, 230bc) et des secteurs rétractables (40a, 40b, 50, 141a, 141b, 142a, 142b, 150a, 150b, 240a, 240b, 240c, 240d, 250a, 250b, 250c, 250d) en direction circonférentielle (F1, F2) par rapport à un axe de rotation (X) du rotor (110, 210), les secteurs rétractables (141a, 141b, 142a, 142b, 150a, 150b, 240a, 240b, 240c, 240d, 250a, 250b, 250c, 250d) comportant au moins une première série de secteurs rétractables (141a, 142a, 150a ; 240a, 250a ; 240d, 250d) de manière télescopique dans ou sur ledit au moins un secteur fixe (130a ; 130ab ; 230ad), et **caractérisé en ce que** lesdits secteurs rétractables (141a, 141b, 142a, 142b, 150a, 150b, 240a, 240b, 240c, 240d, 250a, 250b, 250c, 250d) comprennent en outre au moins une seconde série de secteurs (141b, 142b, 150b ; 240b, 250b ; 240c, 250c) rétractables de manière télescopique dans ou sur au moins un secteur fixe (130b ;130ab ;230bc), ledit au moins un secteur fixe (30, 130a, 130b, 130ab, 230ad, 230bc) ayant une étendue angulaire autour dudit axe (X) qui est inférieure ou égale à 90°.

2. Système propulsif (100, 200) selon la revendication précédente, dans lequel les secteurs rétractables (141a, 142a, 150a ; 240a, 250a ; 240d, 250d) de la première série de secteurs sont rétractables de manière télescopique les uns à l'intérieur des autres et à l'intérieur dudit au moins un secteur fixe (130a ; 130ab ; 230ad) et les secteurs rétractables (141b, 142b, 150b ; 240b, 250b ; 240c, 250c) de la seconde série de secteurs sont rétractables de manière télescopique les uns à l'intérieur des autres et à l'intérieur dudit au moins un secteur fixe (130b ;130ab ;230bc).

3. Système propulsif (100, 200) selon l'une des revendications précédentes, dans lequel les secteurs rétractables (40a, 40b, 50) sont configurés pour qu'un déclenchement de leur rétractation soit asservi à des conditions prédéterminées de vol de l'aéronef (1) ou à une commande volontaire d'un utilisateur.

4. Système propulsif (100, 200) selon la revendication précédente, dans lequel les secteurs rétractables (141a, 141b, 142a, 142b, 150a, 150b, 240a, 240b, 240c, 240d, 250a, 250b, 250c, 250d) ont une forme générale tubulaire et ont chacun des dimensions transversales qui diminuent d'une extrémité circonférentielle à une extrémité circonférentielle opposée.

5. Système propulsif (100, 200) selon l'une quelconque des revendications précédentes, dans lequel chacune des séries de secteurs comporte :
- un secteur d'extrémité (50 ; 150a, 150b ; 250a, 250b, 250c, 250d) ; et
- au moins un secteur intermédiaire (40a, 40b ;141a, 141b, 142a, 142b ; 240a, 240b, 240c, 240d) ;
le secteur d'extrémité (50; 150a, 150b; 250a, 250b, 250c, 250d) de la première série de secteurs comportant des moyens de guidage final (52) et de verrouillage (53) configurés pour coopérer avec des moyens de guidage final (52) et de verrouillage (53) complémentaires dont est muni le secteur d'extrémité (50 ; 150a, 150b ; 250a, 250b, 250c, 250d) de la seconde série de secteurs pour un verrouillage du carénage (120, 220) de nacelle en position fermée.

6. Système propulsif (100, 200) selon l'une des revendications précédentes, dans lequel au moins certains des secteurs (30, 40a, 40b, 50) comportent des moyens d'étanchéité, par exemple au niveau de leurs extrémités circonférentielles, configurés pour assurer une étanchéité avec un ou des secteur(s) adjacent(s).

7. Système propulsif (100, 200) selon l'une des revendications précédentes, dans lequel il comporte un dispositif d'actionnement du déploiement et de la rétractation des secteurs (40a, 40b, 50, 141a, 141b, 142a, 142b, 150a, 150b, 240a, 240b, 240c, 240d, 250a, 250b, 250c, 250d) de chaque série, ce dispositif comportant un système bidirectionnel d'entrainement (2) à glissière pour le déploiement et la rétractation desdits secteurs de manière télescopique, à partir ou à l'intérieur du ou sur le secteur fixe (30, 130a, 130b, 130ab, 230ad, 230bc).

8. Système propulsif (100, 200) selon la revendication précédente, dans lequel le système bidirectionnel d'entrainement (2) comporte des pignons (3a, 3b, 3c) et des segments de crémaillère (4a, 4b, 4c) mis en mouvement par un même moteur électrique (5), le système bidirectionnel (2) étant configuré pour engrainer un pignon (3a) sur au moins une crémaillère (4a) du secteur d'extrémité (50), puis, successivement pour engrainer des pignons (3b, 3c) sur des crémaillères de chaque secteur intermédiaire (40a, 40b), de proche en proche, depuis le secteur fixe (30) dans le cas du déploiement du carénage (120, 220) de la nacelle ou jusqu'au secteur fixe (30) dans le cas de la rétractation du carénage (120, 220) de la nacelle.

9. Système propulsif (100, 200) selon la revendication précédente, dans lequel les secteurs (30, 40a, 40b, 50) comportent au moins un segment de glissière (6a, 6b, 6c, 6d) présentant une section transversale en forme de U.

10. Procédé de commande d'un carénage (120, 220) de nacelle d'un système propulsif (100, 200) pour un aéronef (1) selon l'une quelconque des revendication 1 à 9, à partir d'une position ouverte, respectivement fermée dudit carénage (120, 220) de la nacelle, **caractérisé en ce que** les secteurs rétractables (40a, 40b, 50, 141a, 141b, 142a, 142b, 150a, 150b, 240a, 240b, 240c, 240d, 250a, 250b, 250c, 250d) sont déployés, respectivement emboités, en direction circonférentielle (F1, respectivement F2), par rapport à un axe de rotation (X) du rotor (110, 210), de manière télescopique, à partir, respectivement dans ou sur, dudit/ledit au moins un secteur fixe (130a, 130b ; 130ab ; 230ad ; 230bc).

11. Procédé de commande selon la revendication 10, dans lequel le déploiement du carénage (120, 220) de la nacelle, à partir d'une position d'ouverture du carénage (120, 220) de la nacelle, comprend les étapes suivantes :
- détection d'une condition de vol prédéterminée en commande automatique ou d'une commande manuelle de fermeture du carénage (120, 220) de la nacelle ;
- envoi d'une demande de déploiement des secteurs (40a, 40b, 50) à un boitier de contrôle et de commande ;
- commande du système bidirectionnel d'entrainement (2) en extension pour déployer le carénage (120, 220) de la nacelle selon une direction circonférentielle (F1) autour du rotor (110, 210) depuis le ou chaque secteur fixe (30) ;
- verrouillage du carénage (120, 220) de la nacelle en position déployée par les moyens de verrouillage (53) du ou de chaque secteur d'extrémité (50) ;
- détection et avertissement à un utilisateur des conditions de verrouillage actif en position déployée.

12. Procédé de commande selon la revendication précédente, dans lequel la condition de vol prédéterminée de commande automatique de fermeture du carénage (120, 220) de la nacelle est une phase de vol stationnaire de l'aéronef (1) ou une vitesse d'avancement de l'aéronef (1) inférieure ou égale à 180 km/h.

13. Procédé de commande selon la revendication 10, dans lequel la rétractation du carénage (120, 220) de la nacelle, à partir d'une position de fermeture du carénage (120, 220) de la nacelle, comprend les étapes suivantes :
- détection d'une condition de vol prédéterminée en commande automatique ou d'une commande manuelle d'ouverture du carénage (120, 220) de la nacelle ;
- envoi d'une demande de rétractation des secteurs (40a, 40b, 50) à un boitier de contrôle et de commande ;
- commande du système bidirectionnel d'entrainement (2) en contraction pour rétracter le carénage (120, 220) de la nacelle selon une direction circonférentielle (F2) autour du rotor (110, 210) jusqu'à imbrication complète des secteurs dans le ou chaque secteur fixe (30) ;
- verrouillage du carénage de la nacelle en position rétractée ;
- détection et avertissement à un utilisateur des conditions de verrouillage actif en position rétractée.

14. Procédé de commande selon la revendication précédente, dans lequel la condition de vol prédéterminée de commande automatique d'ouverture du carénage (120, 220) de la nacelle est une vitesse d'avancement de l'aéronef (1) supérieure à 180 km/h.

15. Aéronef (1) **caractérisé en ce qu'**il comporte au moins un système propulsif (100, 200) selon l'une quelconque des revendications 1 à 9, le système propulsif (100, 200) étant monté pivotant sur l'aéronef (1) par l'intermédiaire d'un arbre de pivotement (10, 20) déporté ou traversant par rapport au rotor (110, 210).

## Patentansprüche

1. Antriebssystem (100, 200) für ein Luftfahrzeug (1), das mindestens einen Rotor (110, 210) und eine Gondel umfasst, die eine Verkleidung (120, 220) aufweist, die sich um den mindestens einen Rotor (110, 210) erstreckt, wobei diese Gondelverkleidung (120, 220) in Sektoren geteilt ist und mindestens einen stationären Sektor (30, 130a, 130b, 130ab, 230ad, 230bc) und Sektoren (40a, 40b, 50, 141a, 141b, 142a, 142b, 150a, 150b, 240a, 240b, 240c, 240d, 250a, 250b, 250c, 250d) umfasst, die in umfänglicher Richtung (F1, F2) in Bezug auf eine Rotationsachse (X) des Rotors (110, 210) einfahrbar sind, wobei die einfahrbaren Sektoren (141a, 141b, 142a, 142b, 150a, 150b, 240a, 240b, 240c, 240d, 250a, 250b, 250c, 250d) mindestens eine erste Reihe von Sektoren (141a, 142a, 150a; 240a, 250a; 240d, 250d) umfasst, die teleskopisch in oder auf den mindestens einen stationären Sektor (130a; 130ab; 230ad) einfahrbar sind, und **dadurch gekennzeichnet, dass** die einfahrbaren Sektoren (141a, 141b, 142a, 142b, 150a, 150b, 240a, 240b, 240c, 240d, 250a, 250b, 250c, 250d) außerdem mindestens eine zweite Reihe von Sektoren (141b, 142b, 150b; 240b, 250b; 240c, 250c), die teleskopisch in oder auf mindestens einen stationären Sektor (130b; 130ab; 230bc) einfahrbar sind, umfasst, wobei der mindestens eine stationäre Sektor (30, 130a, 130b, 130ab, 230ad, 230bc) ein Winkelausmaß um die Achse (X) aufweist, das kleiner oder gleich 90° ist.

2. Antriebssystem (100, 200) nach dem vorstehenden Anspruch, wobei die einfahrbaren Sektoren (141a, 142a, 150a; 240a, 250a; 240d, 250d) der ersten Reihe von Sektoren teleskopisch ineinander und in den mindestens einen stationären Sektor (130a; 130ab; 230ad) einfahrbar sind, und die einfahrbaren Sektoren (141b, 142b, 150b; 240b, 250b; 240c, 250c) der zweiten Reihe von Sektoren teleskopisch ineinander und in mindestens einen stationären Sektor (130b; 130ab; 230bc) einfahrbar sind.

3. Antriebssystem (100, 200) nach einem der vorstehenden Ansprüche, wobei die einfahrbaren Sektoren (40a, 40b, 50) dazu konfiguriert sind, dass ein Auslösen ihres Einfahrens von vorbestimmten Flugbedingungen des Luftfahrzeugs (1) oder einem absichtlichen Befehl eines Benutzers abhängig ist.

4. Antriebssystem (100, 200) nach dem vorstehenden Anspruch, wobei die einfahrbaren Sektoren (141a, 141b, 142a, 142b, 150a, 150b, 240a, 240b, 240c, 240d, 250a, 250b, 250c, 250d) eine allgemeine Rohrform aufweisen und jeweils Quermaße aufweisen, die von einem Umfangsende zu einem entgegengesetzten Umfangsende abnehmen.

5. Antriebssystem (100, 200) nach einem der vorstehenden Ansprüche, wobei jede der Reihen von Sektoren Folgendes umfasst:
- einen Endsektor (50; 150a, 150b; 250a, 250b, 250c, 250d); und
- mindestens einen Zwischensektor (40a, 40b; 141a, 141b, 142a, 142b; 240a, 240b, 240c, 240d);
wobei der Endsektor (50; 150a, 150b; 250a, 250b, 250c, 250d) der ersten Reihe von Sektoren abschließende Führungs- (52) und Verriegelungsmittel (53) umfasst, die dazu konfiguriert sind, mit komplementären abschließenden Führungs- (52) und Verriegelungsmitteln (53), mit welchen der Endsektor (50; 150a, 150b; 250a, 250b, 250c, 250d) der zweiten Reihe von Sektoren versehen ist, für eine Verriegelung der Gondelverkleidung (120, 220) in geschlossener Position zusammenzuwirken.

6. Antriebssystem (100, 200) nach einem der vorstehenden Ansprüche, wobei mindestens bestimmte der Sektoren (30, 40a, 40b, 50) Abdichtmittel umfassen, beispielsweise auf der Ebene ihrer Umfangsenden, die dazu konfiguriert sind, eine Abdichtung mit einem angrenzenden Sektor oder den angrenzenden Sektoren sicherzustellen.

7. Antriebssystem (100, 200) nach einem der vorstehenden Ansprüche, das eine Betätigungsvorrichtung des Ausfahrens und des Einfahrens der Sektoren (40a, 40b, 50, 141a, 141b, 142a, 142b, 150a, 150b, 240a, 240b, 240c, 240d, 250a, 250b, 250c, 250d) jeder Reihe umfasst, wobei diese Vorrichtung ein bidirektionales Antriebssystem (2) mit Gleitschiene für das Ausfahren und das Einfahren der Sektoren auf teleskopische Weise ausgehend von oder innerhalb des oder auf dem stationären Sektor (30, 130a, 130b, 130ab, 230ad, 230bc) umfasst.

8. Antriebssystem (100, 200) nach dem vorstehenden Anspruch, wobei das bidirektionale Antriebssystem (2) Ritzel (3a, 3b, 3c) und Zahnstangensegmente (4a, 4b, 4c) umfasst, die von demselben Elektromotor (5) in Bewegung versetzt werden, wobei das bidirektionale System (2) dazu konfiguriert ist, in ein Ritzel (3a) auf mindestens einer Zahnstange (4a) des Endsektors (50) einzugreifen, dann nacheinander, um Ritzel (3b, 3c) auf den Zahnstangen jedes Zwischensektors (40a, 40b) nach und nach ausgehend von dem stationären Sektor (30) in dem Fall des Ausfahrens der Verkleidung (120, 220) der Gondel oder bis zu dem stationären Sektor (30) in dem Fall des Einfahrens der Verkleidung (120, 220) der Gondel einzugreifen.

9. Antriebssystem (100, 200) nach dem vorstehenden Anspruch, wobei die Sektoren (30, 40a, 40b, 50) mindestens ein Gleitschienensegment (6a, 6b, 6c, 6d) umfassen, das einen Querschnitt in Form eines U aufweist.

10. Steuerverfahren einer Gondelverkleidung (120, 220) eines Antriebssystems (100, 200) für ein Luftfahrzeug (1) nach einem der Ansprüche 1 bis 9, ausgehend von einer offenen Position jeweils. geschlossenen der Verkleidung (120, 220) der Gondel, **dadurch gekennzeichnet, dass** die einfahrbaren Sektoren (40a, 40b, 50, 141a, 141b, 142a, 142b, 150a, 150b, 240a, 240b, 240c, 240d, 250a, 250b, 250c, 250d) ausgefahren werden, jeweils in Umfangsrichtung (F1 bzw. F2) in Bezug auf eine Rotationsachse (X) des Rotors (110, 210) auf teleskopische Weise jeweils ausgehend in oder auf dem/dem mindestens einen stationären Sektor (130a, 130b; 130ab; 230ad; 230bc) ausgefahren bzw. eingerückt werden.

11. Steuerverfahren nach Anspruch 10, wobei das Ausfahren der Verkleidung (120, 220) der Gondel ausgehend von einer Öffnungsposition der Verkleidung (120, 220) der Gondel die folgenden Schritte umfasst:
- Erfassen einer vorbestimmten Flugbedingung mit Automatiksteuerung oder eines manuellen Schließbefehls der Verkleidung (120, 220) der Gondel;
- Senden einer Ausfahranfrage der Sektoren (40a, 40b, 50) an ein Steuer- und Lenkgehäuse;
- Steuern des bidirektionalen Antriebssystems (2) in Erweiterung, um die Verkleidung (120, 220) der Gondel gemäß einer Umfangsrichtung (F1) um den Rotor (110, 210) ausgehend von dem oder jedem stationären Sektor (30) auszufahren;
- Verriegeln der Verkleidung (120, 220) der Gondel in ausgefahrener Position durch die Verriegelungsmittel (53) des oder jedes Endsektors (50);
- Erfassen und Bekanntgeben bei einem Benutzer der aktiven Verriegelungszustände in ausgefahrener Position.

12. Steuerverfahren nach dem vorstehenden Anspruch, wobei die vorbestimmte Automatiksteuer-Flugbedingung des Schließens der Verkleidung (120, 220) der Gondel eine Phase stationären Flugs eines Luftfahrzeugs (1) oder einer Fluggeschwindigkeit des Luftfahrzeugs (1) kleiner oder gleich 180 km/h ist.

13. Steuerverfahren nach Anspruch 10, wobei das Einfahren der Verkleidung (120, 220) der Gondel ausgehend von einer Schließposition der Verkleidung (120, 220) der Gondel die folgenden Schritte umfasst:
- Erfassen einer vorbestimmten Flugbedingung mit Automatiksteuerung oder eines manuellen Öffnungsbefehls der Verkleidung (120, 220) der Gondel;
- Senden einer Einfahranfrage der Sektoren (40a, 40b, 50) an ein Steuer- und Lenkgehäuse;
- Steuern des bidirektionalen Antriebssystems (2) in Zusammenziehen, um die Verkleidung (120, 220) der Gondel gemäß einer Umfangsrichtung (F2) um den Rotor (110, 210) bis zu dem vollständigen Verschachteln der Sektoren in dem oder jedem stationären Sektor (30) einzufahren;
- Verriegeln der Verkleidung der Gondel in eingefahrener Position;
- Erfassen und Bekanntgeben bei einem Benutzer der aktiven Verriegelungszustände in eingefahrener Position.

14. Steuerverfahren nach dem vorstehenden Anspruch, wobei die vorbestimmte Automatiksteuer-Flugbedingung der Öffnung der Verkleidung (120, 220) der Gondel eine Fluggeschwindigkeit des Luftfahrzeugs (1) größer 180 km/h ist.

15. Luftfahrzeug (1), **dadurch gekennzeichnet, dass** es mindestens ein Antriebssystem (100, 200) nach einem der Ansprüche 1 bis 9 umfasst, wobei das Antriebssystem (100, 200) schwenkend auf dem Luftfahrzeug (1) über eine Schwenkwelle (10, 20), die in Bezug auf den Rotor (110, 210) versetzt oder durchquerend ist, umfasst.

## Claims

1. A propulsion system (100, 200) for an aircraft (1), comprising at least one rotor (110, 210) and a nacelle having a fairing (120, 220) extending around said at least one rotor (110, 210), this fairing (120, 220) of the fairing being sectorised and comprising at least one fixed sector (30, 130a, 130b, 130ab, 230ad, 230bc) and retractable sectors (40a, 40b,50, 141a, 141b, 142a, 142b, 150a, 150b, 240a, 240b, 240c, 240d, 250a, 250b, 250c, 250d) in circumferential direction (F1, F2) with respect to an axis of rotation (X) of the rotor (110, 210), the retractable sectors (141a, 141b, 142a, 142b, 150a, 150b, 240a, 240b, 240c, 240d, 250a, 250b, 250c, 250d) comprising at least a first series of retractable sectors (141a, 142a, 150a; 240a, 250a; 240d, 250d) which are telescopically retractable into or onto said at least one fixed sector (130a; 130ab; 230ad), and **characterised in that** said retractable sectors (141a, 141b, 142a, 142b, 150a, 150b, 240a, 240b, 240c, 240d, 250a, 250b, 250c, 250d) further comprise at least a second series of sectors (141b, 142b, 150b; 240b, 250b; 240c, 250c) which are telescopically retractable into or onto at least one fixed sector (130b; 130ab; 230bc), said at least one fixed sector (30, 130a, 130b, 130ab, 230ad, 230bc) having an angular extent around said axis (X) which is less than or equal to 90°.

2. The propulsion system (100, 200) according to the preceding claim, wherein the retractable sectors (141a, 142a, 150a; 240a, 250a; 240d, 250d) of the first series of sectors are telescopically retractable within each other and within said at least one fixed sector (130a; 130ab; 230ad) and the retractable sectors (141b, 142b, 150b; 240b, 250b; 240c, 250c) of the second series of sectors are telescopically retractable within each other and within said at least one fixed sector (130b; 130ab; 230bc).

3. The propulsion system (100, 200) according to any of the preceding claims, wherein the retractable sectors (40a, 40b, 50) are configured so that a triggering of their retraction is dependent on predetermined flight conditions of the aircraft (1) or on a voluntary command from a user.

4. The propulsion system (100, 200) according to the preceding claim, wherein the retractable sectors (141a, 141b, 142a, 142b, 150a, 150b, 240a, 240b, 240c, 240d, 250a, 250b, 250c, 250d) have a generally tubular shape and each have transverse dimensions that decrease from one circumferential end to an opposite circumferential end.

5. The propulsion system (100, 200) according to any of the preceding claims, wherein each of the series of sectors comprises:
- an end sector (50; 150a, 150b; 250a, 250b, 250c, 250d); and
- at least one intermediate sector (40a, 40b; 141a, 141b, 142a, 142b; 240a, 240b, 240c, 240d);
the end sector (50; 150a, 150b; 250a, 250b, 250c, 250d) of the first series of sectors comprising final guiding (52) and locking (53) means configured to cooperate with complementary final guiding (52) and locking (53) means with which the end sector (50; 150a, 150b; 250a, 250b, 250c, 250d) of the second series of sectors is provided for a locking of the nacelle fairing (120, 220) in a closed position.

6. The propulsion system (100, 200) according to any of the preceding claims, wherein at least some of the sectors (30, 40a, 40b, 50) comprise sealing means, for example at their circumferential ends, configured to ensure a seal with one or more adjacent sectors.

7. The propulsion system (100, 200) according to any of the preceding claims, wherein it comprises a device for actuating the deployment and retraction of the sectors (40a, 40b, 50, 141a, 141b, 142a, 142b, 150a, 150b, 240a, 240b, 240c, 240d, 250a, 250b, 250c, 250d) of each series, this device comprising a bidirectional slide drive system (2) for the telescopically deployment and retraction of said sectors, from or inside of or on the fixed sector (30, 130a, 130b, 130ab, 230ad, 230bc).

8. The propulsion system (100, 200) according to the preceding claim, wherein the bidirectional drive system (2) comprises pinions (3a, 3b, 3c) and rack segments (4a, 4b, 4c) set in motion by a same electric motor (5), the bidirectional system (2) being configured to engage a pinion (3a) on at least one rack (4a) of the end sector (50), then, successively, to engage pinions (3b, 3c) on racks of each intermediate sector (40a, 40b), step by step, from the fixed sector (30) in the case of the deployment of the fairing (120, 220) of the nacelle or until the fixed sector (30) in the case of the retraction of the fairing (120, 220) of the nacelle.

9. The propulsion system (100, 200) according to the preceding claim, wherein the sectors (30, 40a, 40b, 50) comprise at least one slide segment (6a, 6b, 6c, 6d) having a U-shaped cross section.

10. A method for commanding a nacelle fairing (120, 220) of a propulsion system (100, 200) for an aircraft (1) according to any one of claims 1 to 9, from an open position, respectively closed of said fairing (120, 220) of the nacelle, **characterized in that** the retractable sectors (40a, 40b, 50, 141a, 141b, 142a, 142b, 150a, 150b, 240a, 240b, 240c, 240d, 250a, 250b, 250c, 250d) are telescopically deployed, respectively nested, in the circumferential direction (F1, respectively F2) with respect to an axis of rotation (X) of the rotor (110, 210) from, respectively into or onto, said at least one fixed sector (130a, 130b; 130ab; 230ad; 230bc).

11. The commanding method according to claim 10, wherein deploying the fairing (120, 220) of the nacelle, from an open position of the fairing (120, 220) of the nacelle, comprises the following steps:
- detecting a predetermined flight condition in automatic command or a manual command of the closure of the fairing (120, 220) of the nacelle;
- sending a request to deploy the sectors (40a, 40b, 50) to a control and command box; - commanding the bidirectional drive system (2) in extension to deploy the fairing (120, 220) of the nacelle according to a circumferential direction (F1) around the rotor (110, 210) from said or each fixed sector (30);
- locking the fairing (120, 220) of the nacelle in the deployed position by the locking means (53) of said or each end sector (50);
- detecting and warning a user of the active locking conditions in the deployed position.

12. The commanding method according to the preceding claim, wherein the predetermined flight condition for automatic command of closure of the fairing (120, 220) of the nacelle is a hover phase of the aircraft (1) or a forward speed of the aircraft (1) less than or equal to 180 km/h.

13. The commanding method according to claim 10, wherein retracting the fairing (120, 220) of the nacelle from a closed position of the fairing (120, 220) of the nacelle comprises the following steps:
- detecting a predetermined flight condition in automatic command or a manual command of opening the fairing (120, 220) of the nacelle;
- sending a request to retract the sectors (40a, 40b, 50) to a control and command box;
- commanding the bidirectional drive system (2) in contraction to retract the fairing (120, 220) of the nacelle according to a circumferential direction (F2) around the rotor (110, 210) until the sectors are completely interlocked in said or each fixed sector (30);
- locking the fairing of the nacelle in the retracted position;
- detecting and warning a user of the active locking conditions in the retracted position.

14. The commanding method according to the preceding claim, wherein the predetermined flight condition of automatic command for opening of the fairing (120, 220) of the nacelle is a forward speed of the aircraft (1) greater than 180 km/h.

15. An aircraft (1) **characterized in that** it comprises at least one propulsion system (100, 200) according to any one of claims 1 to 9, the propulsion system (100, 200) being mounted so as to pivot on the aircraft (1) by a pivot shaft (10, 20) that is offset from the rotor (110, 210) or passes through the rotor (110, 210).
